# EUROPEAN PATENT APPLICATION

(11) **EP 1 225 497 A1**
(43) Date of publication of application: **24.07.2002**
(21) Application number: 02001606.9
(22) Date of filing: 23.01.2002
(51) Int. Cl.: G05B 19/418

(54) **Network-embedded device controller with local database**

(30) Priority: 23.01.2001 US 767541
(71) Applicant: Gerrity, Daniel W., New York 10007 (US)
(72) Inventor: Gerrity, Daniel W., New York 10007 (US)
(74) Representative: Grünecker, Kinkeldey, Stockmair & Schwanhäusser Anwaltssozietät

(57) **Abstract**

A network-embedded device controller for industrial process control comprises a processor for running a real-time operating system, input devices measuring parameters related to an industrial process and operatively connected with the processor, an embedded service stack with a local database containing data related to the industrial process, and a dynamic service stack including a program executable by the processor to control the industrial process in a predetermined manner. The device has particular applicability for use with an in-motion weighing system.

## Description

### BACKGROUND OF THE INVENTION

### 1. Field of the Invention

The present invention relates to industrial control devices and more particularly, to a network-embedded device for controlling industrial processes.

### 2. Background of the Invention

Industrial processes typically are controlled by standard computers with serial interfaces to programmable logic controllers (PLC). The PLCs are configured to execute logic for controlling components of an industrial process line by sending appropriate control signals to system components via a communication connection. System components include line control relays, conveyors, sensors, solenoids and other devices collectively comprising the process machinery. The PLCs differ from standard PC-based computer controllers in that the PLC architecture is simpler and generally designed for a specific purpose and thereby more reliable than a PC-based controller.

The simplified structure of PLCs, however, generally prohibits PLCs from interfacing with machines of different standards and protocols because each machine on an assembly line produces unique data, and may contain varying software platforms. Therefore, the scope of the control loop, the speed of the PLC and the interoperability of devices and machines controlled by the PLC are limited. Moreover, the PLC or PC-based controller typically obtains data for use in the decision making process from a database on the network, which slows down the overall speed of the system, and creates external dependencies.

U.S. Patent No. 6,061,603 purports to describe a system for remotely accessing an industrial control system over a commercial communications network. The control system allows a user to access a PLC system over a communications network using, for example, a web browser. The system includes an Internet web interface between the network and the PLC. The web interface serves web pages from an Ethernet interface on the PLC and includes a TCP/IP stack. With the interface, a user can retrieve pertinent data regarding operation of the PLC, including the PLC configuration, I/O and register status, operating statistics, diagnostics, and distributed I/O configurations. However, the system of the '603 patent has the disadvantage that no embedded local database system provides industrial process control information, so that fast, predictable control speeds are difficult to achieve.

### SUMMARY OF THE INVENTION

The present invention provides a network-embedded device controller (NEDC) for industrial process control, the NEDC including a processor for running a real-time operating system, input devices measuring parameters related to an industrial process and operatively connected with the processor, an embedded service stack with a local database containing data related to the industrial process, and a dynamic service stack including a program executable by the processor to control the industrial process in a predetermined manner.

The present invention thus provides a system for controlling industrial processes with a remotely accessible NEDC comprising a real-time operating system for a central processing unit (CPU) for real-time execution of control application software to operate the process and calculate certain outputs as a function of a sensor input. The CPU is operably connected to the system components, which may include sensors, a local database, a central database, and a network interface. The term "real-time" as defined herein means response at specified machine times predictable within one millisecond.

Information for the local database may be obtained during an initialization period via a network. The plurality of input devices may include a plurality of sensors, including a local sensor set and a global sensor. The sensors can measure pertinent system data such as machine states and external variables, e.g., roll, pitch, yaw, horizontal oscillations and vertical oscillations. One of the input devices also may be a PLC.

The controller preferably is connected to an input sensor through a network switch.

Preferably, the program run by the NEDC may control a device as a function of the local database and as a function of the information from the input sensor.

The NEDC has particular applicability as a controller for an in-motion weighing system, with the controller determining a weight of an object. The input devices of the system include a scale, a local sensor array, global sensor and local database.

The present invention also provides a method of controlling an industrial process comprising the steps of:
loading database information onto a local database of an embedded service stack of a network-embedded device controller;
receiving input data of the industrial process at the network-embedded device controller; and
performing an industrial process calculation at the network-embedded device controller as a function of information in the local database and the input data.

The method may further include scanning an object so as to form part of the input data.

Preferably, the receiving input data step may include receiving data from a PLC.

The industrial process calculation may include calculating a weight of an object.

The present invention also provides an in-motion weighing system having a spacing conveyor for transporting objects to be weighed, a scale conveyor receiving the objects from the spacing conveyor, and a network-embedded device controller having a processor, an dynamic service stack containing a real-time executable program for controlling the spacing conveyor and determining a weight of the objects, and an embedded service stack containing a local database having information related to the objects to be weighed.

A local sensor set permits determination by the program of accelerations affecting the objects to be weighed while a global sensor provides an input to the controller.

A scanner may scan the objects prior to the spacing conveyor so as to permit the NEDC to accept random introduction of objects defined in the local database and determine the proper spacing and throughput rate for same.

A bar code label printer may print bar code labels to be attached to the objects, the labels detailing the identity and the weight of the object.

The NEDC of the present invention may be implemented as a stand-alone system or added onto an existing programmable logic controller. The system provides useful embedded services such as a real-time operating system, local databases and a common computing platform for applications requiring millisecond response times for complex algorithms functioning on input from local and remote, networked sensors.

It should be noted that the present invention may be implemented in any type of industrial process where independent real-time processing of manufacturing information is needed. However, in a preferred embodiment, the NEDC assesses the weight of items moving along a conveyor belt. Fast and accurate resolution of gravity on objects accelerated through a system is accomplished by uncoupling forces other than gravity acting on the object by real-time integration of motion detection and strain gauge data. The process involves sampling object motions through a particular field and integrating the resultant forces. Specific examples include an NEDC-enabled weighing system operating in unstable environments, such as a fishing ship at sea where both the object to be weighed and the weighing system are unstable, subjected to forces pushing and pulling in all directions. Another type of example exists where the object is moving but the system is stationery. For example, weight stations for vehicles moving at highway speeds, or products passing through a production process. In all cases, objects are subject to forces spatially interacting with gravity, e.g., vertical oscillations. These forces are isolated by the NEDC with high sampling rates of weight measurement, object movement by measuring disturbances in a field projected by a local sensor array, and system movement with respect to the earth's gravitational field.

Referring to the fishing boat example, the pitching and rolling of the ship produces forces on the weighing system and the objects passing through the system. Sensors detect and measure motions of the ship, the system, and the objects. The measured forces are resolved with respect to the earth's gravitational field to obtain an acceleration-referenced weight measurement by digitally separating all forces acting on the object, except for gravity.

### BRIEF DESCRIPTION OF THE DRAWINGS

The present invention will be further elucidated with reference to a particular weighing system embodiment of the present invention in which:
Fig. 1 shows a block diagram of a network embedded device controller according to the present invention.
Fig. 2 shows an in motion weighing system according to the present invention.
Fig. 3 shows the service stacks of Fig. 1 in detail.
Fig. 4 shows a flowchart detailing the process of the system in Fig. 2.

### DETAILED DESCRIPTION

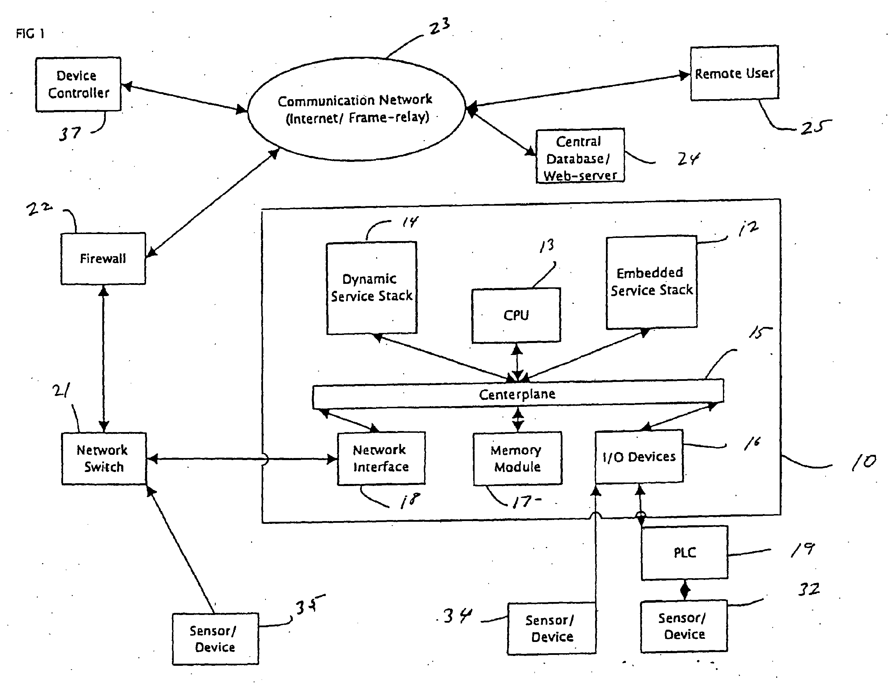

Fig. 1 shows a block diagram of an NEDC according to the present invention. An NEDC 10 contains a CPU 13, a dynamic service stack 14, an embedded service stack 12, a memory module 17, an I/O controller 16, and a network interface 18. The components of the NEDC 10 are connected via a centerplane 15. The NEDC 10 communicates with remote users 25, a central database web server 24 for controlling the dynamic service stack 14, and a peer device controller 37 via a communication network 23 through a network switch 21 and a firewall 22. The CPU 13 manages system components to execute specific functions in a prescribed sequence and obtain the data necessary to control an industrial process.

While the NEDC 10 can process all control commands with software on the dynamic service stack, it also can interact with a PLC 19, if desired, through I/O device 16. Thus the PLC 19 can, if present, provide specific preliminary control functions for a specific sensor or device 32. The NEDC 10 of the present invention thus can operate in conjunction with existing PLC devices, such as the PLC of U.S. Patent No. 6,061,603, which is hereby incorporated by reference herein.

System operators may access the NEDC 10 from within the local network through the network switch 21 or a remote user 25 can gain access across the communications network 23 via the firewall 22. A central web-server and database 24 controls and updates the dynamic and embedded service stack 14, which is responsible for executing the control logic.

Remote users 25 can directly access the device controller 10 to set local parameters stored in the database of the embedded service stack 12 and to load an application program into dynamic service stack 14. These parameters are necessary to execute the control logic independent of the central database web server 24.

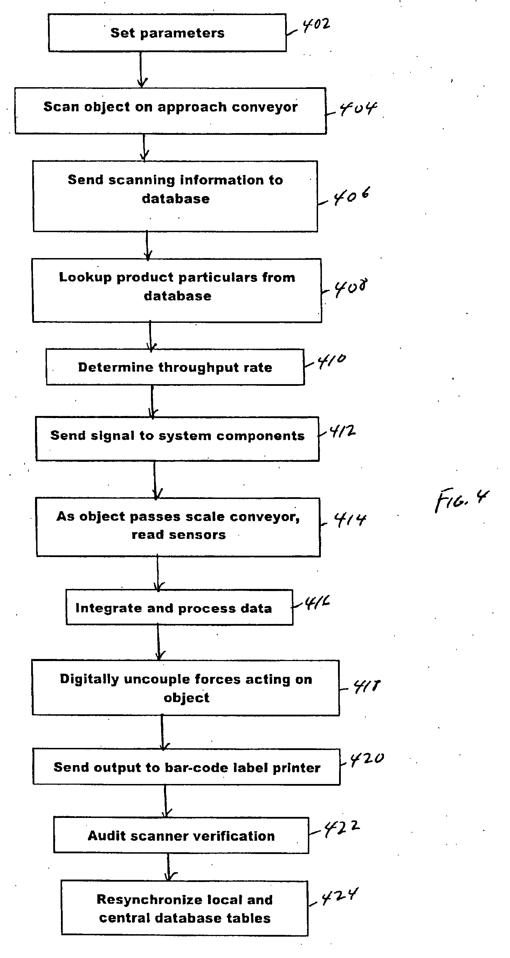

The local database is located in the embedded service stack 12 and stores operative configuration data, such as requirements, for example quality requirements, and parameters. The central database 24 provides this information to the local database during an initialization period. The operation of the NEDC 10 will be described in more detail with respect to Fig. 4.

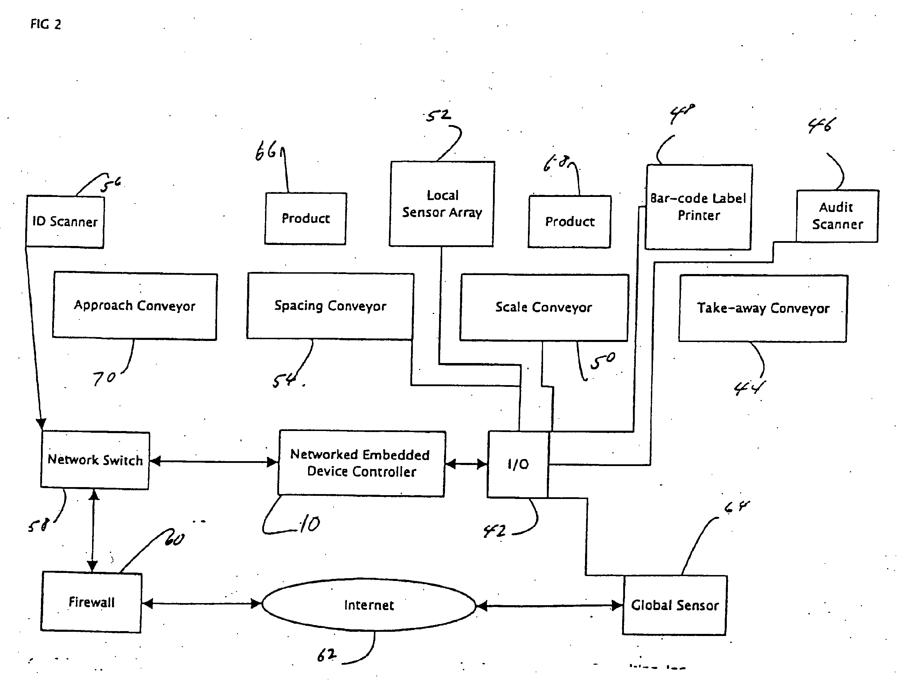

Fig. 2 shows an in-motion weighing system according to the present invention. NEDC 10 is operably connected to an I/O controller 42 and a network switch 58. The I/O controller 42 interfaces with a spacing conveyor 54, a local sensor array 52, scale or weighing conveyor 50, a bar-code label printer 48, an audit scanner 46, and a global sensor 64. Products to be weighed enter spacing conveyor 54 via an approach conveyor 70. Spacing conveyor 54 sets the weighing process speed and the spacing between products to be weighed. Scale conveyor 50 is a conveyor with a strain gauge for measuring the force of an object on the conveyor 50. The object to be weighed is then transported further by a take-away conveyor 44.

The network switch 58 provides connectivity to a communication network, such as a global communication network such as the Internet 62, via a firewall 60. In addition, switch 58 is connected to an ID scanner 56, which can be used to identify the products to be weighed.

The global sensor 64 is an external sensor outside the local environment, and senses forces global to local sensor array 52, which consists of a number of sensors that project a field in which objects to be weighed are tracked in three dimensions. For example, global sensors 64 could sense whole ship movements, while local sensors 52 sense movements of a fish on the conveyor. Therefore, global sensor 64 provides a reference point from which to determine the forces acting on the weighing system and the object to be weighed. Global sensor 64 may itself be an NEDC performing necessary measurements. Readings from the global sensor 64 and the local sensors 52 are processed to evaluate the accelerations that the system and object to be weighed are subject to. Where the system is stationary, the global sensor 64 may not be necessary.

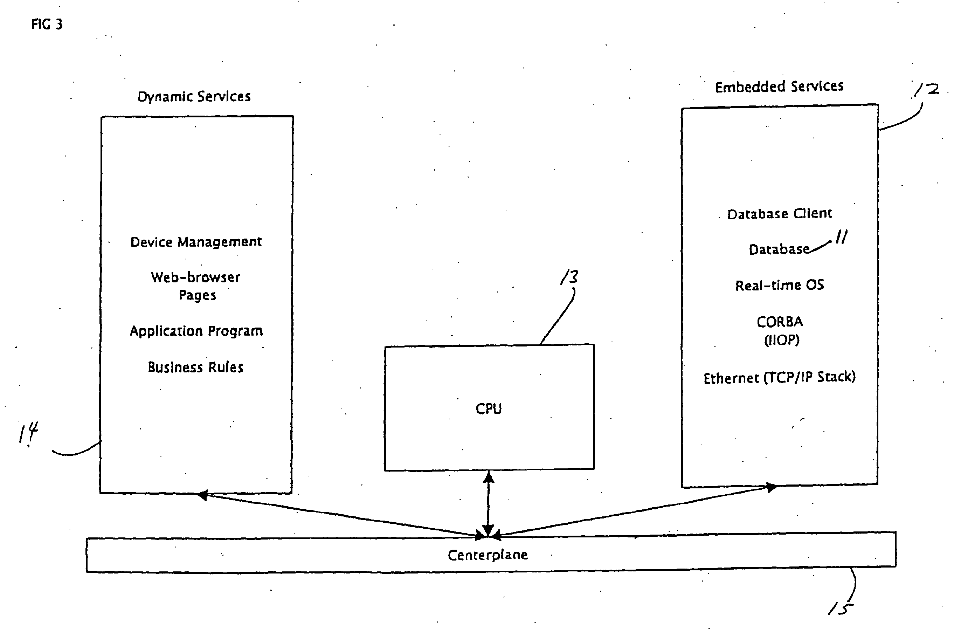

Fig. 3 shows the NEDC service stacks 12, 14 in more detail. Dynamic service stack 14 is controlled by the network database server 24 and is updated via FTP or COBRA protocol according to an application program that resides on the database server 24. The embedded services in embedded service stack 12 reside locally and independently of the network database server 24.

The system operates according to the application program of the dynamic service stack 14 and data stored in the local database 11 of the embedded service stack 12. Operating parameters registered by a remote user set the operating parameters for the NEDC 10 to function as a standalone unit for the time necessary to maintain a maximum amount of up-time and for fault tolerance with respect to the communication network 23 and central database web-server 24.

Now referring to Fig. 4, there is shown a flowchart for the process of the system in Fig. 2. The parameters for operating the system are set (step 402) by a user communicating with the CPU over the network. For example, if fish on a boat are to be weighed, the local database is loaded with information relating fish size to an approximate weight. Thus fish between 3 inches long and 6 feet long, for example, are provided with approximate weights. This information is stored locally in he NEDC 10 at database 11. The information then is not again called from the central database 24 during the weighing operation. In the dynamic service stack 14, an application program for weighing fish on a boat also is loaded. The application program provides the logic for determining how to weight the fish, given that the ship is in motion and the fish as well is moving. Accelerations not related to the fish weight are filtered out by the application program. The various inputs from the sensors are thus used to modify a strain gauge reading on the scale conveyor 50 to obtain the actual fish weight. A margin of error for the weighing can also be stored in local database. The margin of error can be used by the application program to set the spacing of spacing conveyor 54 and the speed with which the fish are processed. The longer the fish remains on scale conveyor 50, the more accurate the weight reading.

The object to be weighed enters the system on the approach conveyor 70 where it is scanned by the ID scanner 56 (step 404). For example the fish length is approximated. The scanning information is sent to the NEDC 10 (step 406) for identification of the object and retrieval of system configuration information based on the object particulars (step 408) such as estimated mass, over/ under weight tolerances, tare weight of any packaging, product profile and specific accuracy requirements from the local database of the embedded service stack. For example, the local database may contain information indicating that a fish three feet long should weigh approximately fifty pounds. In addition, the local database may contain information required to build customer-specific orders for subsequent resynchronization with the central database.

The system then determines the appropriate speed of the spacing conveyor, as a function of the particulars from the local database information (step 410) and any relevant global variables, such as the pitch and yaw of the ship. For example, for fish of about fifty pounds, the fish should remain at least 1.4 seconds (or another time) on the scale conveyor so as to obtain the desired accuracy. Also, in smooth seas, for example, the spacing conveyor may operate at higher speeds while still achieving a desired accuracy. With the present invention, these calculations all take place real-time with the NEDC: no outside database access is required. Next, a signal is sent to the appropriate system components to set appropriate conveyor speeds (step 412). In the system of Fig. 2, the appropriate components include the spacing conveyor 54 and the scale conveyor 50. The product 66 then enters the spacing conveyor 54 for proper space registration onto the scale conveyor 50. For example, fish of about three feet (about 50lbs) should be spaced a certain space apart so that the desired time on the scale conveyor is achieved.

As the product 66 passes across the scale conveyor 50, a local sensor array 52 connected through the I/O controller 42 collects raw data relating to movement of the product 68 on the scale conveyor (step 414). This raw data is then integrated with data from the global sensor 64 and the strain gauge of the scale conveyor 50 and processed by the application program (step 416) to digitally uncouple all accelerations other than gravity for the weight calculation (step 418). Output weight and other relevant data is then relayed to the bar-code printer 48 (step 420) for application of a bar-code label on the product 66. The bar code label is then verified by an audit scanner 46 (step 422). The embedded database client services 16 allow for the periodic resynchronization of the local database 1 with the central database 24 (step 424).

The NEDC 10 of the present invention permits real-time control of the weighing process so as to permit accuracies and stability not known to be achievable with a traditional PLC or PC-based controller.

## Claims

1. A network-embedded device controller for industrial process control comprising:
a processor for running a real-time operating system;
input devices measuring parameters related to an industrial process and operatively connected with the processor;
an embedded service stack with a local database containing data related to the industrial process; and
a dynamic service stack including a program executable by the processor to control the industrial process in a predetermined manner.

2. The controller as recited in claim I wherein information for the local database is obtained during an initialization period via a network.

3. The controller as recited in claim 1 wherein the plurality of input devices includes a plurality of sensors.

4. The controller as recited in claim 3 wherein the plurality of sensors includes a local sensor set and a global sensor.

5. The controller as recited in claim 1 wherein the parameters include a machine state and variable external to the controller.

6. The controller as recited in claim 1 wherein the parameters include roll, pitch, yaw, horizontal oscillations and vertical oscillations.

7. The controller as recited in claim 1 wherein one of the input devices is a PLC.

8. The controller as recited in claim 1 wherein the controller is connected to an input scanner through a network switch.

9. The controller as recited in claim 8 wherein the program is further executable to:
control a device as a function of the local database and as a function of the information from the input scanner.

10. The controller as recited in claim 1 wherein the controller is a controller for an in-motion weighing system.

11. The controller as recited in claim 1 wherein the controller determines a weight of an object.

12. The controller as recited in claim 11 wherein the input devices include a scale, a local sensor array and a global sensor.

13. A method of controlling an industrial process comprising the steps of:
loading database information onto a local database of an embedded service stack of a network-embedded device controller;
receiving input data of the industrial process at the network-embedded device controller; and
performing an industrial process calculation at the network-embedded device controller as a function of information in the local database and the input data; and
synchronization of the local database with a central database.

14. The method as recited in claim 13 further comprising scanning an object so as to form part of the input data.

15. The method as recited in claim 13 wherein the receiving input data step includes receiving data from a PLC.

16. The method as recited in claim 13 wherein the industrial process calculation includes calculating a weight of an object.

17. An in-motion weighing system comprising:
a spacing conveyor for transporting objects to be weighed;
a scale conveyor receiving the objects from the spacing conveyor; and
a network-embedded device controller having a processor, an dynamic service stack containing a real-time executable program for controlling the spacing conveyor and determining a weight of the objects, and an embedded service stack containing a local database having information related to the objects to be weighed.

18. The system as recited in claim 17 further comprising a local sensor set for permitting determination by the program of accelerations affecting the objects to be weighed.

19. The system as recited in claim 18 further comprising a global sensor for providing an input to the controller.

20. The system as recited in claim 17 further comprising a scanner for identifying the objects prior to the spacing conveyor.

21. The system as recited in claim 17 further comprising a bar code label printer for printing bar code labels detailing an identity and the weight of the object.
